# FASCICULE DE BREVET EUROPEEN

(11) **EP 1 228 478 B1**
(45) Date de publication et mention de la délivrance du brevet: **02.05.2007**
(21) Numéro de dépôt: 00977629.5
(22) Date de dépôt: 07.11.2000
(51) Int. Cl.: G06K 7/00

(54) **SYSTEME DE TRANSPONDEURS TENANT COMPTE DU NIVEAU DE BRUIT ENVIRONNANT**
SICH AN WECHSELNDE UMGEBUNGEN ANPASSENDES TRANSPONDERSYSTEM
TRANSPONDER SYSTEM ADAPTING TO AMBIENT NOISE LEVEL

(30) Priorité: 08.11.1999 FR 9913983
(43) Date de publication de la demande: 07.08.2002
(73) Titulaire: COMMISSARIAT A L'ENERGIE ATOMIQUE, 75015 Paris (FR)
(72) Inventeur: VACHERAND, François, F-38800 Le Pont de Claix (FR); CROCHON, Elisabeth, F-38320 Poisat (FR)
(74) Mandataire: Poulin, Gérard
(86) Numéro de dépôt international: PCT/FR2000/003092
(87) Numéro de publication internationale: WO 2001/035320

(56) Documents cités:
- EP-A- 0 777 194
- EP-A- 0 779 520
- WO-A-96/11455
- FR-A- 2 758 027
- GB-A- 2 119 141
- US-A- 4 829 540

## Description

### Domaine de l'invention

L'invention concerne un procédé d'échange d'informations entre un dispositif interrogateur et des dispositifs répondeurs, dans lequel le signal émis par les dispositifs répondeurs est adapté au bruit électromagnétique ambiant dans la transaction.

L'invention concerne également le système mettant en oeuvre ce procédé.

L'invention s'applique à toutes transactions entre un dispositif interrogateur et des dispositifs répondeurs (ou étiquettes) dont on ne connaît, à priori, ni le nombre, ni l'identité, ni le bruit électromagnétique ambiant. En particulier, elle trouve des applications dans le domaine de la reconnaissance d'individus porteurs de badges, ou dans le domaine de la comptabilisation et du contrôle d'objets porteurs d'étiquettes électroniques tels que des bagages dans les aéroports ou des produits dans une chaîne de production. Elle s'applique aussi à la gestion des stocks entreposés ou bien à la détermination de la liste des marchandises contenues dans un caddie de supermarché.

### Etat de la technique

De nombreux systèmes et procédés d'identification d'objets porteurs de dispositifs répondeurs (appelés plus simplement étiquettes), sont actuellement connus de l'homme de l'art. La plupart d'entre eux s'appliquent à une lecture multi-étiquettes.

Certains de ces procédés proposent, lorsqu'il y a détection de collision de messages émis simultanément par les étiquettes, une réémission du code de l'étiquette après un temps aléatoire propre à chaque étiquette.

Il existe aussi des procédés qui consistent à laisser une tranche de temps particulière pour la réponse d'une étiquette. Chaque tranche de temps est déterminée de manière univoque par le code d'identification de chaque étiquette. Cependant, ce procédé n'optimise pas le temps de transaction entre le dispositif interrogateur et l'ensemble des étiquettes.

De plus, le temps nécessaire à la lecture, par le dispositif interrogateur, de toutes les étiquettes varie en fonction du nombre d'étiquettes et des tirages de nombres aléatoires. Autrement dit, ce procédé n'est pas déterministe, dès lors qu'il est basé sur des tirages de nombres aléatoires en supplément de l'aléa du nombre d'étiquettes à identifier.

Un autre procédé, adapté à un ensemble statique d'étiquettes à lire une seule fois, est décrit dans la demande de brevet FR-A-2 677 135. Cette demande de brevet explique comment les étiquettes présentes dans le champ d'interrogation du dispositif interrogateur sont amenées, par le dispositif, à fournir successivement chaque bit du code d'identification jusqu'à ce que celui-ci soit entièrement identifié. Pour cela, les étiquettes répondent à un signal de commande du dispositif interrogateur ; lorsqu'une étiquette détecte que le code en cours d'identification est différent du sien, elle s'inhibe momentanément (c'est-à-dire qu'elle devient « muette ») de sorte que le cycle d'identification continue avec les autres étiquettes jusqu'à ce qu'il ne reste plus qu'une seule étiquette non inhibée. Le code de cette étiquette est alors identifié. En fin de cycle d'identification, sur une seule commande du dispositif interrogateur, l'étiquette identifiée s'inhibe définitivement et les autres étiquettes lèvent leur inhibition momentanée. La procédure d'identification est ensuite réinitialisée pour identifier une autre étiquette. Ces opérations sont répétées jusqu'à ce que toutes les étiquettes aient été identifiées séparément.

Un tel procédé permet une lecture systématique et déterministe des codes d'identification.

Il existe, par ailleurs, des procédés de lecture multiple qui font appel, à l'émission par les étiquettes, à un signal indiquant la présence de bits à 1 et/ou à 0. De tels procédés sont décrits notamment dans les demandes de brevets françaises publiées sous les numéros FR-A-2 776 094, FR-A-2 776 095 et FR-A-2 776 096.

Dans de tels procédés, l'interrogateur détermine les codes d'identification des étiquettes par un parcours d'arborescence.

Dans le cas d'une arborescence bit à bit, l'interrogateur demande aux étiquettes si leur bit de rang n est à 1 (ou à zéro). Les étiquettes répondent par un signal « oui » ou « non » qu'on appelle signal-réponse.

Dans le cas d'une scrutation moins fine, l'interrogateur demande aux étiquettes si leurs p bits suivants ont une valeur donnée (p étant un nombre strictement inférieur au nombre total de bits qui constituent le code d'identification). Les étiquettes répondent de la même façon que dans le cas du bit à bit, par un « oui » ou un « non », appelé signal-réponse.

Dans tous ces cas, les étiquettes n'émettent jamais une valeur de bit(s).

Dans de tels procédés, la durée du signal émis par l'étiquette est fixée, une fois pour toutes au moment de la réalisation des systèmes de mise en oeuvre de ces procédés. Autrement dit, la durée du signal est figée, cette durée ayant été déterminée en faisant un compromis entre l'estimation des bruits électromagnétiques rencontrés généralement en site applicatif et la durée de l'identification.

Ces procédés sont donc des procédés déterministes. Cependant, ils n'optimisent pas nécessairement le temps de transaction total entre les étiquettes et le dispositif interrogateur puisque la durée d'un signal est fixée quelle que soit la qualité de la transmission, c'est-à-dire quel que soit le niveau ambiant du bruit électromagnétique.

Le document EP 0 779 520 A2 décrit un système de radiocommunication entre un dispositif d'interrogation et au moins un répondeur. Dans ce système, le dispositif d'interrogation envoie aux répondeurs une instruction pour réduire la vitesse de communication dans la voie montante en cas de perturbations.>

### Exposé de l'invention

L'invention a justement pour but de remédier aux inconvénients des techniques précédemment décrites. A cette fin, elle propose un procédé selon la revendication 1.

Avantageusement, le procédé comporte les étapes suivantes :
a) détermination du rapport entre le signal émis par le dispositif répondeur et le bruit ambiant ;
b) détermination, à partir de ce rapport signal/bruit, d'un paramètre relatif à la durée du signal de réponse du dispositif répondeur et/ou d'un paramètre relatif à la forme d'onde du signal de réponse du dispositif répondeur ;
c) intégration de ces paramètres dans le signal d'interrogation émis par le dispositif interrogateur ;
d) réception du signal d'interrogation par le dispositif répondeur et mémorisation de ces paramètres de durée et/ou de forme ;
e) émission, par le dispositif répondeur, d'un signal de réponse émis pendant la durée mémorisée en d) et/ou selon la forme mémorisée en d).

Selon un mode de réalisation de l'invention, le procédé consiste à déterminer le paramètre de durée et/ou le paramètre de forme du signal à émettre au début de la première séquence d'interrogation des dispositifs répondeurs, une séquence étant une suite d'interrogations d'étiquettes et/ou de transactions dans les mêmes conditions de mesure.

Selon un autre mode de réalisation de l'invention, le procédé consiste à déterminer le paramètre de durée et/ou le paramètre de forme à chaque début de séquence d'interrogation des dispositifs répondeurs.

Dans le cas d'une recherche des codes d'identification par un parcours d'arborescence, chaque dispositif répondeur est apte à émettre deux signaux différents, chacun de ces signaux ayant une forme d'onde distincte. Dans ce cas, les deux signaux de réponse peuvent être émis soit sur deux intervalles de temps différents, soit pendant le même intervalle de temps.

L'invention concerne aussi un système d'échange d'informations selon la revendication 7 mettant en oeuvre le procédé de l'invention. Selon un mode de réalisation le système comprend un dispositif interrogateur et une pluralité de dispositifs répondeurs situés dans le champ électromagnétique du dispositif interrogateur, chacun de ces dispositifs interrogateur et répondeur comportant des moyens E/R de signaux ainsi que des moyens électroniques de séquencement et des moyens de mémorisation. Ce système se caractérise par le fait que chaque dispositif répondeur comporte un timer apte à mémoriser une durée déterminée en fonction du rapport entre le signal émis par le répondeur et le bruit électromagnétique ambiant, et à décompter un temps d'émission pendant cette durée, et/ou au moins un registre à décalage apte à mémoriser une forme d'onde déterminée en fonction du rapport entre le signal émis et le bruit électromagnétique ambiant et à restituer cette forme d'onde à chaque émission de signal.

### Brève description des figures

- La figure 1 représente schématiquement un échange d'informations entre un dispositif interrogateur et deux dispositifs répondeurs (ou étiquettes) ;
- la figure 2 représente schématiquement l'architecture d'un dispositif répondeur du système mettant en oeuvre le procédé de l'invention dans le cas où le signal émis est adapté en durée ;
- la figure 3 représente schématiquement l'architecture d'une étiquette mettant en oeuvre le procédé de l'invention dans le cas où deux formes d'ondes différentes sont utilisées ;
- la figure 4 représente schématiquement l'architecture du dispositif interrogateur du système mettant en oeuvre le procédé de l'invention ; et
- la figure 5 représente différents types de signaux pouvant être émis par les étiquettes.

### Description détaillée de modes de réalisation de l'invention

Le procédé de l'invention a pour but de permettre une identification systématique des codes d'identification de chaque étiquette en évitant la réémission d'informations qui est souvent une des causes de la perte d'efficacité du système interrogateur/étiquettes. Pour cela, l'identification de ces codes se fait en prenant en compte le bruit électromagnétique ambiant de l'application, c'est-à-dire le bruit électromagnétique ambiant dans la transaction entre les étiquettes et le dispositif interrogateur.

Le procédé de l'invention est donc un procédé de gestion des signaux émis par les étiquettes. Cette gestion cherche à adapter le signal émis par les étiquettes au bruit électromagnétique ambiant de l'application afin d'améliorer le taux d'erreur de bits et, par conséquent, les performances du système interrogateur/étiquettes, en termes de fiabilité et de rapidité.

L'adaptation du signal émis par les étiquettes au bruit électromagnétique ambiant se fait, selon l'invention, en réglant soit la durée d'émission du signal, soit la forme d'onde du signal ou encore la durée et la forme d'onde du signal émis par les étiquettes, et cela en fonction du rapport signal/bruit constaté dans l'application. Plus précisément, on parle de rapport signal/bruit pour le rapport entre le signal émis par le dispositif répondeur en direction du dispositif interrogateur et le bruit électromagnétique ambiant dans la transaction. Ce rapport signal/bruit doit être optimisé afin d'obtenir un taux d'erreur de bits suffisamment faible pour que le système soit fiable.

Le procédé de l'invention peut ainsi s'appliquer à l'identification de plusieurs codes d'identification (appelée lecture multi-étiquettes).

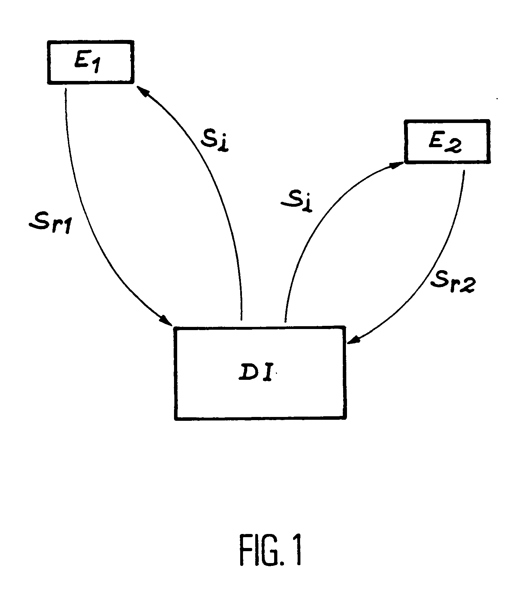

On a représenté sur la figure 1, le système de l'invention qui permet de mettre en oeuvre le dispositif qui vient d'être globalement décrit. Ce système comporte un dispositif interrogateur, référencé DI sur la figure 1 et qui peut être appelé plus simplement « interrogateur » où « lecteur », et deux dispositifs répondeurs, appelés « étiquettes » et référencés E₁ et E₂.

On a représenté, dans ce système constitué de l'interrogateur et des étiquettes, les signaux émis entre les différentes étiquettes et l'interrogateur. Le signal Sᵢ représente le signal émis par le dispositif interrogateur à destination des étiquettes E₁ et E₂ ; ce signal Sᵢ comporte l'indication d'un paramètre relatif à la forme d'onde du signal à émettre par l'étiquette et/ou à la durée que doit avoir ce signal.

Les signaux référencés Sᵣ₁ et Sᵣ₂ représentent les signaux émis par les étiquettes E₁ et E₂ en réponse au signal Sᵢ. Ces signaux Sᵣ₁ et Sᵣ₂ contiennent chacun la réponse des étiquettes E₁ et E₂ à l'interrogation envoyée par le dispositif interrogateur ; ces réponses sont émises sur la durée d'émission ou selon la forme d'onde indiquée par le paramètre inclus dans le signal Sᵢ.

Le paramètre de durée et/ou de forme d'onde du signal de réponse Sᵣ est déterminé par le dispositif interrogateur lui-même, en fonction du rapport signal/bruit détecté. Dès que ce paramètre a été déterminé, le dispositif interrogateur envoie une commande de démarrage de la séquence d'identification. Cette commande de démarrage, qui contient le paramètre de durée et/ou le paramètre de forme d'onde, est émise par le dispositif interrogateur vers toutes les étiquettes présentent dans le champ électromagnétique de l'interrogateur.

Comme on le verra plus précisément par la suite, chaque étiquette est réalisée de façon à pouvoir mémoriser ce paramètre. Dans le mode de réalisation où le paramètre est la durée d'émission du signal, chaque étiquette comporte une minuterie interne (appelée aussi « timer ») dont la durée est fonction du paramètre reçu dans la commande de démarrage. Le signal émis par l'étiquette est alors égal au temps de décompte de ce timer.

Dans le cas où le paramètre de commande de démarrage indique la forme d'onde choisie, l'étiquette comporte un registre série à décalage qui permet de mémoriser la forme d'onde et de la restituer à chaque émission de message.

Selon un mode de réalisation de l'invention, chaque étiquette peut comporter, à la fois un timer interne, et un registre série à décalage permettant de modifier, soit la durée du signal, soit la forme d'onde du signal, soit les deux paramètres. En effet, les deux paramètres de forme d'onde et de durée peuvent être utilisés de manière dépendante, ou bien de manière indépendante.

Ainsi, lorsqu'une étiquette reçoit la commande de démarrage de la séquence d'interrogation émise par le dispositif interrogateur, elle interprète cette commande et identifie le paramètre. Lorsque la valeur contenue dans ce paramètre est la durée d'émission, celle-ci est chargée dans le timer de l'étiquette qui indiquera le temps d'émission du signal envoyé par l'étiquette. Dans le cas où l'étiquette comporte à la fois un timer et un registre à décalage, le timer cadencera aussi le registre à décalage contenant la forme d'onde. Si le registre à décalage est de longueur N, le temps d'émission du timer correspond :
- soit au temps qu'il faut pour décaler les N valeurs, c'est-à-dire un tour complet de décalage ;
- soit à une valeur, entière ou non, de cycles complets de décalage.

Dans le cas où les deux paramètres sont utilisés de manière indépendante, la forme d'onde peut être, par exemple, un signal d'horloge carré, c'est-à-dire une séquence de 1 et de 0 à une certaine fréquence, associée à une durée qui est indépendante de la durée donnée dans la commande de démarrage. La fréquence utilisée peut être, par exemple, une des sous-harmoniques de la fréquence porteuse qui peut être par exemple de 13,56 MHz.

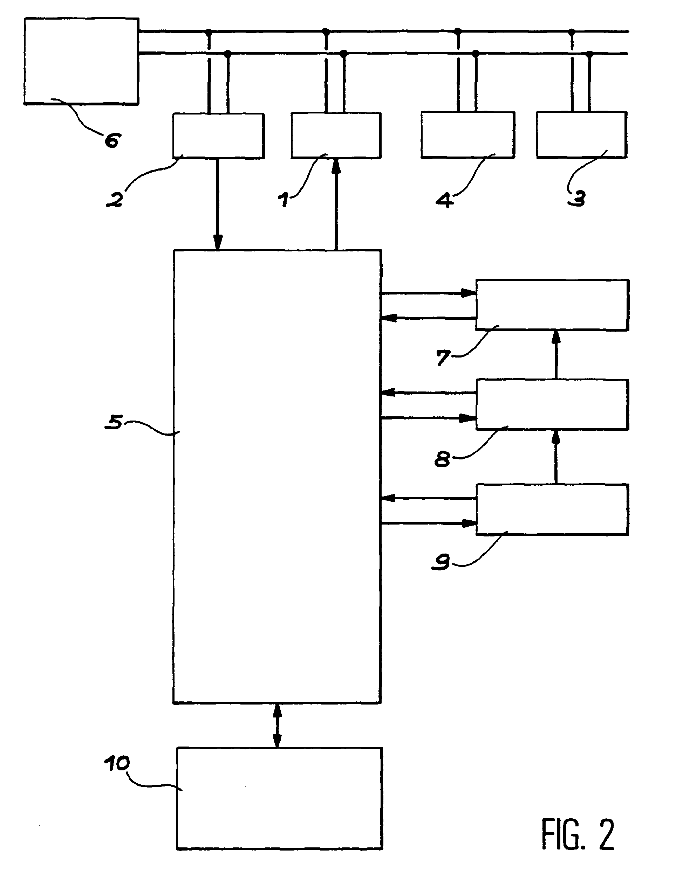

Pour mieux comprendre le procédé de l'invention, nous avons représenté sur les figures 2, 3 et 4 les schémas fonctionnels d'un dispositif répondeur et d'un dispositif interrogateur du système de l'invention utilisé pour mettre en oeuvre le procédé décrit précédemment.

Plus précisément, la figure 2 représente l'architecture d'une étiquette dont la structure permet d'adapter, à la fois le signal dans sa durée d'émission et à la fois dans sa forme d'onde.

Pour cela, chaque étiquette comporte des moyens électroniques de modulation 1 et des moyens électroniques de démodulation 2. Chaque étiquette comporte, de plus, des moyens électromagnétiques de transmission, référencés 6, qui, associés aux moyens de modulation et de démodulation, permettent l'échange d'informations avec le dispositif interrogateur.

En outre, chaque étiquette comporte des moyens électroniques de récupération d'énergie, référencés 4, ainsi que des moyens électroniques d'extraction d'horloge, référencés 3.

Ces moyens 1, 2, 3, 4 et 6 sont connus de l'homme de l'art et déjà décrits dans la demande de brevet FR-A-2 677 135 ; ils ne seront donc pas décrits de façon plus détaillée dans la présente demande.

Chaque étiquette comporte également des moyens de séquencement, référencés 5, qui lui permettent de séquencer une suite d'actions à entreprendre en fonction des messages reçus du dispositif interrogateur. Elle comporte aussi des moyens de mémorisation 10 protégés en écriture et réservés au stockage du code d'identification de l'étiquette, ainsi que différents modules qui lui permettent de répondre au message du dispositif interrogateur, afin de lui communiquer le code d'identification. Ces modules peuvent être, par exemple, ceux décrits dans la demande de brevet français numéro FR-A-2 776 095.

Des moyens spécifiques (8 et/ou 9) sont prévus dans chaque étiquette pour lui permettre d'interpréter la commande de démarrage envoyée par le dispositif interrogateur et d'identifier le ou les paramètre(s) : paramètre de durée, paramètre de forme d'onde ou, à la fois, paramètres de durée et de forme d'onde.

L'étiquette, représentée sur la figure 2, correspond au mode de réalisation dans lequel les deux paramètres de durée et de forme d'onde du signal peuvent être reçus et interprétés. Les signaux d'émission des étiquettes peuvent donc s'adapter en forme ou en durée en fonction du bruit ambiant de la transmission. Dans ce cas, les moyens permettant d'interpréter la commande de démarrage sont :
- un registre de stockage, référencé 9, qui assure le stockage de la valeur du paramètre de durée inscrit dans la commande de démarrage ;
- un timer 8 qui permet de minuter la durée du signal à émettre ; et
- un registre à décalage, référencé 7, qui permet de stocker la forme d'onde contenue dans le paramètre de la commande de démarrage et de l'émettre vers le dispositif de modulation. Chacun de ces éléments 7, 8 et 9 est relié au séquenceur 5 pour échanger des informations avec les autres éléments via le séquenceur.

Dans certains modes de réalisation, il est possible d'utiliser deux formes d'ondes différentes pour le signal de réponse des étiquettes. En effet, dans le cas général où une seule forme d'onde est utilisée, le paramètre de forme d'onde contient une séquence binaire classique.

Dans certaines applications, il est intéressant ou nécessaire d'utiliser deux formes d'ondes différentes, comme c'est le cas pour une recherche dans une arborescence binaire, c'est-à-dire lorsque l'identification des codes d'identification des étiquettes se fait en parcourant un arbre binaire (comme cela est décrit dans la demande de brevet FR-A-2 776 094).

En effet, dans des applications où l'identification du code se fait par parcours d'arborescence binaire, les étiquettes doivent nécessairement émettre la valeur du bit de code en cours de lecture, c'est-à-dire qu'ils doivent émettre deux types de signaux, à savoir un bit à 0 ou un bit à 1. Autrement dit, pendant l'intervalle de temps réservé à l'émission des étiquettes, une étiquette émet soit un bit, soit l'autre, en fonction de la valeur du bit du code en cours de lecture. Dans ce cas, puisque deux signaux doivent être émis, on peut utiliser deux formes d'ondes différentes. L'émission de ces deux formes d'ondes peut se faire selon plusieurs modes différents, et notamment :
* le mode TDMA à deux « slots » de temps appropriés, c'est-à-dire avec deux intervalles de temps consécutifs ; dans ce mode, les deux signaux (appelés BiPO et BiP1) sont émis successivement sur deux intervalles successifs.
* le mode CDMA à deux séquences dites « orthogonales » ; dans ce mode, les deux signaux (BiPO et BiP1) sont émis pendant le même intervalle de temps.

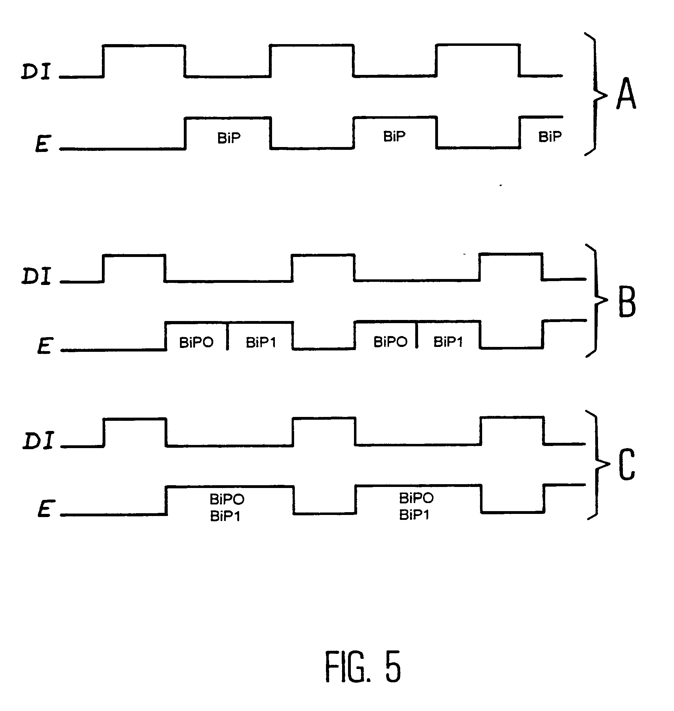

Sur la figure 5, on a représenté temporellement et schématiquement ces différents modes de signaux émis, d'une part, par le dispositif interrogateur et, d'autre part, par les étiquettes.

Plus précisément, la partie A de la figure 5 montre le cas où une seule forme d'onde (BiP) est utilisée pour le signal de réponse des étiquettes. La première voie montre le signal émis par le dispositif interrogateur DI ; la seconde voie montre le signal simple émis par l'étiquette en réponse au dispositif interrogateur.

Les parties B et C de la figure 5 montrent des cas où deux formes d'ondes différentes (BiPO, BiP1) sont utilisées pour le signal de réponse des étiquettes. Sur la partie B, la voie DI représente le signal émis par le dispositif interrogateur dans le mode TDMA et la voie E représente les signaux émis par les étiquettes dans le même mode TDMA. Sur la partie C, la voie DI représente le signal émis par le dispositif interrogateur dans le mode CDMA et la voie E représente les signaux émis par les étiquettes dans le même mode CDMA.

Dans le mode de réalisation qui vient d'être décrit, où deux formes d'ondes sont utilisées, il est nécessaire que chaque étiquette puisse déterminer et interpréter les deux paramètres de formes d'ondes contenues dans la commande de démarrage émise par le dispositif interrogateur.

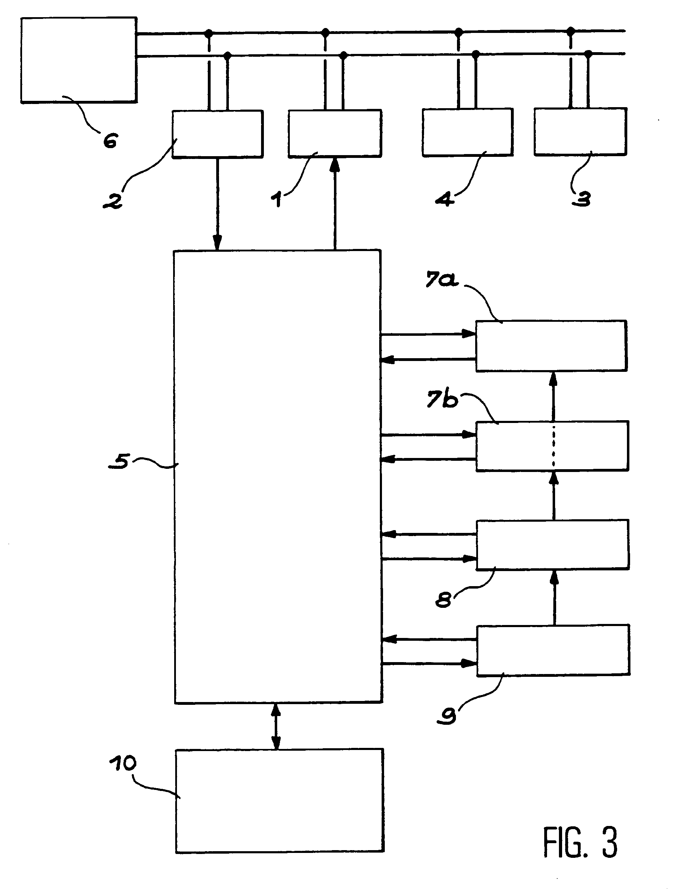

Ce mode de réalisation de l'étiquette est représenté sur la figure 3. Dans ce cas, l'étiquette comporte des moyens 1, 2, 3, 4 et 6 identiques à ceux décrits pour la figure 2 et dont le rôle est de permettre la communication de l'étiquette avec le dispositif interrogateur. Elle comporte également un séquenceur 5 et une mémoire 10 identiques à ceux décrits pour l'étiquette de la figure 2.

Dans ce mode de réalisation, l'étiquette comporte un timer 8, un registre de stockage 9 et deux registres à décalage, référencés 7a et 7b, qui permettent de stocker chacun une forme d'onde et d'émettre chacun la forme d'onde mémorisée, vers le modulateur 1.

Il est également possible, dans ce mode de réalisation, que l'étiquette comporte deux timers liés chacun à un des deux registres à décalage, chaque registre à décalage étant alors cadencé par un timer différent.

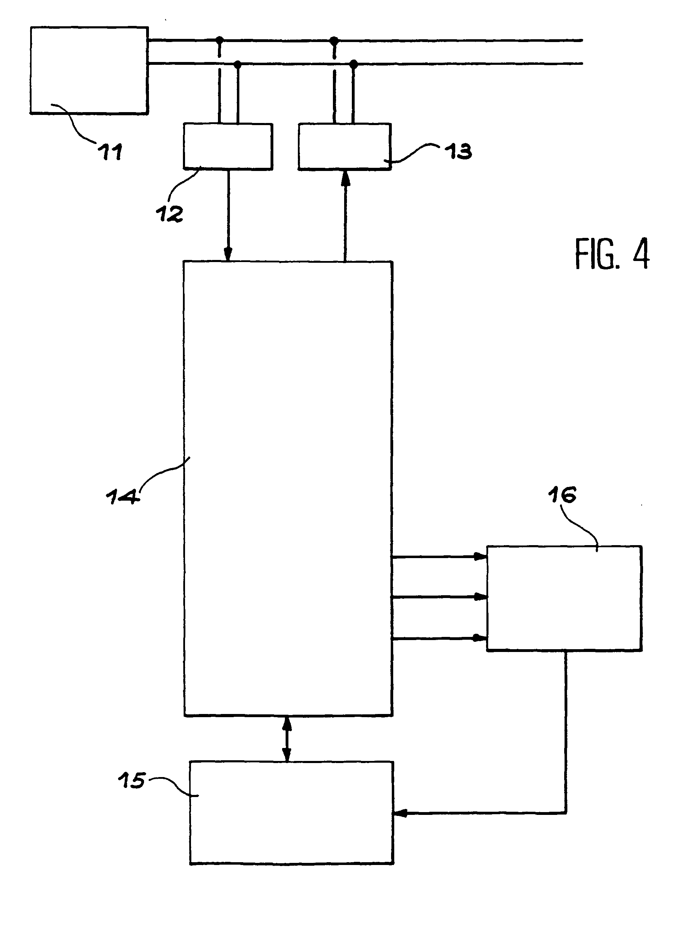

Sur la figure 4, on a représenté schématiquement l'architecture d'un dispositif interrogateur, pouvant être utilisé pour mettre en oeuvre le procédé de l'invention. Ce dispositif interrogateur comporte des moyens électroniques de transmission 11, ainsi que des moyens électroniques de modulation 13 et de démodulation 12 qui lui permettent de communiquer des informations binaires vers l'ensemble des étiquettes. Ce dispositif interrogateur comporte, de plus, des moyens électroniques de séquencement 14 (ou séquenceur) dont le rôle est de séquencer une suite d'actions à entreprendre en fonction des messages reçus des étiquettes, ainsi que des moyens 15 de stockage de la liste des étiquettes présentes dans le champ électromagnétique et d'un pointeur de liste 16 qui permet de pointer l'élément en cours de traitement, dans cette liste.

Il est à noter, toutefois, que le dispositif interrogateur, qui vient d'être décrit, est un exemple de dispositif interrogateur ; d'autres dispositifs interrogateurs peuvent être utilisés pour la mise en oeuvre du procédé de l'invention.

Le procédé de l'invention, décrit ci-dessus, peut fonctionner selon deux modes différents, à savoir :
- un mode statique dans lequel le paramètre de durée et/ou le paramètre de forme d'onde est(sont) réglé(s) une fois pour toutes au début de l'application ;
- un mode dynamique dans lequel l'un ou l'autre des paramètres de durée et de forme d'onde, ou bien les deux paramètres, évolue à chaque début de séquence d'interrogation en fonction de la qualité des échanges entre les étiquettes et le dispositif interrogateur.

Le mode statique peut être utilisé, par exemple, dans des environnements où le niveau de bruit électromagnétique est supposé stable (par exemple dans le cas d'un stockage en entrepôt). Dans ce cas, le paramètre de durée et/ou le paramètre de forme d'onde est(sont) fixé(s) au moment de l'installation du système.

Le mode dynamique est utilisé dans des environnements où le niveau de bruit électromagnétique est supposé variable (par exemple, lors de la lecture des étiquettes d'un caddy avec plusieurs lecteurs alignés et se perturbant les uns les autres).

Dans ce cas, un paramètre de durée et/ou un paramètre de forme d'onde est(sont) choisi(s) au moment de l'installation du système, en fonction du bruit constaté à ce moment là. La modification de ce(s) paramètre(s) peut ensuite se faire à chaque début de cycle de lecture. Les modifications du ou des paramètre(s) peuvent être liées à une analyse de la qualité des transmissions, c'est-à-dire, par exemple, à la détermination du nombre de codes avec CRC (Contrôle cyclique par redondance) erronés, lus par seconde. Ainsi, le processus d'adaptation peut être amené à augmenter ou à diminuer la durée d'émission selon les statistiques constatées sur la qualité des transmissions. Ce même processus peut entraîner la modification de la forme d'onde des signaux émis, sur les mêmes observations.

Le mode dynamique peut être utilisé, par exemple, lorsque l'installation est placée à proximité d'un brouilleur à bande étroite. Dans ce cas, la forme d'onde peut être modifiée, afin de s'éloigner du brouilleur à bande étroite, si la forme d'onde est aussi à bande étroite, ce qui est le cas lorsque le signal est modulé, par exemple, selon la modulation FSK.

Dans ce mode de réalisation, le dispositif interrogateur est organisé pour mémoriser la durée et la forme d'onde des signaux en cours d'utilisation (par exemple, au moyen d'une mémoire sur disque dur), afin de reprendre à ce niveau, lors d'une utilisation suivante.

## Revendications

1. Procédé d'échange d'informations entre un dispositif interrogateur (DI) et au moins un dispositif répondeur (E1, E2) situé dans le champ électromagnétique du dispositif interrogateur, chaque dispositif répondeur étant muni d'un code d'identification binaire, dans lequel le dispositif interrogateur émet des signaux RF destinés à interroger chaque dispositif répondeur sur la présence d'un bit ou d'un groupe de bits dans son code d'identification,
procédé **caractérisé en ce qu'**il comprend les étapes suivantes :
a) le dispositif interrogateur définit un paramètre relatif à la forme d'onde et/ou à la durée d'émission souhaitée des signaux de réponse dudit au moins un dispositif répondeur à partir des statistiques constatées sur la qualité des transmissions,
b) après définition dudit paramètre, le dispositif interrogateur envoie vers ledit au moins un dispositif répondeur une commande de démarrage de la séquence d'identification incluant ledit paramètre,
c) et à réception de ladite commande ledit au moins un dispositif répondeur
- interprète ladite commande,
- identifie ledit paramètre,
- mémorise ledit paramètre, et
d) au moins un dispositif répondeur émet un signal-réponse dont la forme et/ou la durée d'émission sont fonction dudit paramètre mémorisé de façon à ce que le taux d'erreur soit amélioré.

2. Procédé selon la revendication 1, **caractérisé en ce qu'**il consiste à déterminer le paramètre de durée d'émission et/ou le paramètre de forme au début de la première séquence d'interrogation des dispositifs répondeurs.

3. Procédé selon la revendication 1, **caractérisé en ce qu'**il consiste à déterminer le paramètre de durée d'émission et/ou le paramètre de forme à chaque début de séquence d'interrogation des dispositifs répondeurs.

4. Procédé selon l'une quelconque des revendications 1 à 3, **caractérisé en ce que** chaque dispositif répondeur est apte à émettre deux signaux différents, chacun de ces signaux ayant une forme d'onde distincte.

5. Procédé selon la revendication 4, **caractérisé en ce que** les deux signaux de réponse sont émis sur deux intervalles de temps différents.

6. Procédé selon la revendication 4, **caractérisé en ce que** les deux signaux de réponse sont émis pendant le même intervalle de temps.

7. Système d'échange d'informations entre un dispositif interrogateur (DI) et au moins un dispositif répondeur (E₁, E₂) situé dans le champ électromagnétique du dispositif interrogateur, chacun de ces dispositifs interrogateur et répondeur comportant des moyens E/R de signaux (1-4, 6, 11-13) ainsi que des moyens électroniques de séquencement (5, 14) et des moyens de mémorisation (10, 15), **caractérisé en ce que** :
- ledit dispositif interrogateur comporte en outre des moyens pour définir un paramètre relatif à la forme d'onde et/ou à la durée d'émission souhaitée des signaux de réponse du dispositif répondeur à partir de statistiques constatées sur la qualité des transmissions, et des moyens pour ensuite envoyer ledit paramètre audit dispositif répondeur dans une commande de démarrage de la séquence d' identification,
- chaque dispositif répondeur comporte des moyens pour interpréter ladite commande, identifier et mémoriser ledit paramètre de manière à émettre un signal-réponse dont la forme et/ou la durée d'émission sont fonction dudit paramètre de façon à ce que le taux d'erreur soit amélioré.

8. Système selon la revendication 7, **caractérisé en ce que** ledit dispositif répondeur comporte :
- une minuterie (8) apte à mémoriser une durée d'émission déterminée en fonction du rapport entre le signal émis par le dispositif répondeur et le bruit électromagnétique ambiant, et à décompter un temps d'émission pendant cette durée,
et/ou
- au moins un registre à décalage (7) apte à mémoriser au moins une forme d'onde déterminée en fonction du rapport entre le signal émis et le bruit électromagnétique ambiant et à restituer cette forme d'onde à chaque émission de signal.

## Claims

1. Method for exchanging information between an interrogator device (DI) and at least one transponder device (E1, E2) located in the electromagnetic field of the interrogator device, each transponder device being provided with a binary identification code in which the interrogator device transmits RF signals intended to interrogate each transponder device concerning the presence of a bit or a group of bits in its identification code, **characterized in that** it comprises the following stages:
a) the interrogator device defines a parameter relative to the waveform and/or the desired transmission duration of the response signals of said at least one transponder device on the basis of statistics established concerning the quality of the transmissions,
b) following definition of said parameter, the interrogator device sends to said at least one transponder device a command for starting the identification sequence including said parameter,
c) and on reception of said command said at least one transponder device interprets said command, identifies said parameter and stores said parameter and
d) at least one transponder device transmits a response signal, whose shape and/or transmission duration are a function of said stored parameter in such a way that the error rate is improved.

2. Method according to claim 1, **characterized in that** it consists of determining the transmission duration and/or shape parameter at the start of the first interrogation sequence of the transponder devices.

3. Method according to claim 1, **characterized in that** it consists of determining the transmission duration and/or shape parameter for each start of the interrogation sequences of the transponder devices.

4. Method according to any one of the claims 1 to 3, **characterized in that** each transponder device is able to transmit two different signals, each of said signals having a different waveform.

5. Method according to claim 4, **characterized in that** the two response signals are transmitted on two different time intervals.

6. Method according to claim 4, **characterized in that** the two response signals are transmitted during the same time interval.

7. System for exchanging information between an interrogator device (DI) and at least one transponder device (E1, E2) located in the electromagnetic field of the interrogator device, each of said interrogator and transponder devices incorporating means for transmitting and receiving signals (1-4, 6, 11-13) as well as electronic sequencing means (5, 14) and storage means (10, 15),
**characterized in that**:
said interrogator device also has means for defining a parameter relative to the waveform and/or the desired transmission duration of the response signals of the transponder device on the basis of statistics established on the quality of the transmissions and means for then sending said parameter to said transponder device in a starting control for the identification sequence,
each transponder device has means for interpreting said control, identifying and storing said parameter in such a way as to transmit a response signal, whose shape and/or transmission duration are a function of said parameter in such a way that the error rate is improved.

8. System according to claim 7, **characterized in that** said transponder device comprises:
a timer (8) able to store a given transmission duration as a function of the ratio between the signal transmitted by the transponder device and the ambient electromagnetic noise and count down a transmission time during said period and/or
at least one shift register (7) able to store at least one given waveform as a function of the ratio between the transmitted signal and the ambient electromagnetic noise and to restore said waveform for each signal transmission.

## Patentansprüche

1. Verfahren zum Austauschen von Informationen bzw. Daten zwischen einer Abfragevorrichtung (DI) und wenigstens einer in dem elektromagnetischen Feld der Abfragevorrichtung befindlichen Antwortvorrichtung (E1, E2), wobei jede Antwortvorrichtung einen binären Identifikationscode hat und die Abfragevorrichtung Hochfrequenzsignale aussendet, die dazu bestimmt sind, jede Antwortvorrichtung nach der Präsenz eines Bits oder einer Gruppe von Bits in ihrem Identifikationscode abzufragen,
**dadurch gekennzeichnet, dass** es die folgenden Schritte umfasst:
a) die Abfragevorrichtung definiert einen Parameter bezüglich der Wellenform und/oder der gewünschten Emissionsdauer der Antwortsignale der genannten wenigstens einen Antwortvorrichtung aufgrund der über die Qualität der Übertragungen konstatierten Statistiken,
b) nach dem Definieren des genannten Parameters sendet die Abfragevorrichtung der genannten wenigstens einen Antwortvorrichtung einen Befehl zum Starten der den genannten Parameter enthaltenden Identifikationssequenz,
c) die wenigstens eine Antwortvorrichtung reagiert auf den Empfang des genannten Befehls indem sie
- den genannten Befehl interpretiert,
- den genannten Parameter identifiziert,
- den genannten Parameter speichert,
d) wenigstens eine Antwortvorrichtung sendet ein Antwortsignal, dessen Form und/oder Emissionsdauer von dem genannten gespeicherten Parameter abhängig sind, so dass sich die Fehlerrate verbessert.

2. Verfahren nach Anspruch 1, **dadurch gekennzeichnet, dass** es darin besteht, den Emissionsdauerparameter und/oder den Formparameter am Anfang der ersten Abfragesequenz der Antwortvorrichtungen zu bestimmen.

3. Verfahren nach Anspruch 1, **dadurch gekennzeichnet, dass** es darin besteht, den Emissionsdauerparameter und/oder den Formparameter am Anfang jeder Abfragesequenz der Antwortvorrichtungen zu bestimmen.

4. Verfahren nach einem der Ansprüche 1 bis 3, **dadurch gekennzeichnet, dass** jede Antwortvorrichtung fähig ist, zwei verschiedene Signale zu senden, wobei jedes dieser Signale eine unterschiedliche Form hat.

5. Verfahren nach Anspruch 4, **dadurch gekennzeichnet, dass** die beiden Antwortsignale in zwei verschiedenen Zeitintervallen gesendet werden.

6. Verfahren nach Anspruch 4, **dadurch gekennzeichnet, dass** die beiden Antwortsignale während desselben Zeitintervalls gesendet werden.

7. System zum Austauschen von Informationen bzw. Daten zwischen einer Abfragevorrichtung (DI) und wenigstens einer Antwortvorrichtung (E1, E2), die sich in dem elektromagnetischen Feld der Abfragevorrichtung befindet, wobei jede dieser Abfrage- und Antwortvorrichtungen Signalsende- und -empfangseinrichtungen (1-4, 6, 11-13) sowie elektronische Sequenzereinrichtungen (5, 14) und Speichereinrichtungen (10, 15) umfasst,
**dadurch gekennzeichnet:**
- **dass** die genannte Abfragevorrichtung außerdem Einrichtungen umfasst, um einen Parameter zu definieren, der die Wellenform und/oder die gewünschte Emissionsdauer der Antwortsignale der Antwortvorrichtung aufgrund konstatierter Statistiken über die Qualität der Übertragungen betrifft, sowie Einrichtungen, um anschließend den genannten Parameter der genannten Antwortvorrichtung in einem Startbefehl der Identifikationssequenz zu senden,
- **dass** jede Antwortvorrichtung Einrichtungen zum Interpretieren des genannten Befehls und zum Identifizieren des genannten Parameters umfasst, um ein Antwortsignal zu senden, dessen Form und/oder Emissionsdauer von dem genannten gespeicherten Parameter abhängig sind, so dass sich die Fehlerrate verbessert.

8. System nach Anspruch 7, **dadurch gekennzeichnet, dass** die Antwortvorrichtung umfasst:
- einen Zeitschalter (8), fähig eine bestimmte Emissionsdauer in Abhängigkeit von dem Verhältnis zwischen dem durch die Antwortvorrichtung gesendeten Signal und dem elektromagnetischen Umgebungsgeräusch zu speichern und während dieser Dauer eine Emissionszeit abzuziehen,
und/oder
- wenigstens ein Schieberegister (7), fähig wenigstens eine bestimmte Wellenform in Abhängigkeit von dem Verhältnis zwischen dem gesendeten Signal und dem elektromagnetischen Umgebungsgeräusch zu speichern und diese Wellenform bei jeder Emission des Signals wiederzugeben.
